# EUROPEAN PATENT APPLICATION

(11) **EP 1 072 974 A2**
(43) Date of publication of application: **31.01.2001**
(21) Application number: 00305928.4
(22) Date of filing: 12.07.2000
(51) Int. Cl.: G06F 9/445, G06F 9/45

(54) **Method and system for executing program**

(30) Priority: 27.07.1999 JP 21182399
(71) Applicant: Victor Company of Japan, Ltd., Yokohama 221-0022 (JP)
(72) Inventor: Matsuzawa, Masato, Miura-shi, Kanagawa-ken (JP)
(74) Representative: Senior, Alan Murray

(57) **Abstract**

A first program is transmitted from a server to a terminal including a CPU. The first program is expressed in an intermediate code independent of CPU types. A software translator is transmitted from the server to the terminal. In the terminal, the first program is translated into a second program according to the software translator. The second program is expressed in a code used by the CPU in the terminal. The second program is executed by the CPU in the terminal.

## Description

This invention relates to a method of executing a program such as a computer program. Also, this invention relates to a system for executing a program.

In a known multimedia system, a server distributes application programs to terminals via a communication network or recording discs. In some cases, the terminals have CPU's of various types which use different native codes (CPU codes) respectively.

Generally, the server prepares an application program expressed in an intermediate code independent of the CPU types. Then, the server distributes the application program to the terminals. Each of the terminals has a pre-installed software translator for converting the intermediate code into the native code used by the CPU therein. Thus, each of the terminals translates the intermediate-code application program into a native-code application program. The CPU in the terminal executes the native-code application program.

In the terminal, the software translator continuously occupies a large area within a memory. Thus, the software translator reduces the memory efficiency.

It is a first aim of this invention to provide an improved method of executing a program.

It is a second aim of this invention to provide an improved system for executing a program.

A first aspect of this invention provides a method of executing a program. The method comprises the steps of transmitting a first program from a server to a terminal including a CPU, the first program being expressed in an intermediate code independent of CPU types; transmitting a software translator from the server to the terminal; in the terminal, translating the first program into a second program according to the software translator, the second program being expressed in a code used by the CPU; and executing the second program by the CPU in the terminal.

A second aspect of this invention provides a system comprising a server; a terminal including a CPU; means for transmitting a first program from the server to the terminal, the first program being expressed in an intermediate code independent of CPU types; means for transmitting a software translator from the server to the terminal; and means provided in the terminal for translating the first program into a second program according to the software translator, the second program being expressed In a code used by the CPU.

A third aspect of this invention is based on the second aspect thereof, and provides a system wherein the CPU in the terminal executes the second program.

A fourth aspect of this invention provides a system comprising a server storing a first program expressed in an intermediate code independent of CPU types, and storing software translators for different CPU types respectively; a terminal including a CPU; means for transmitting the first program from the server to the terminal; means for transmitting a translator request signal from the terminal to the server, the translator request signal containing information of a type of the CPU in the terminal; means provided in the server for selecting one from among the software translators in accordance with the CPU type information contained in the translator request signal; means for transmitting the selected software translator from the server to the terminal in response to the translator request signal; and means provided in the terminal for translating the first program into a second program according to the software translator, the second program being expressed in a code used by the CPU in the terminal.

A fifth aspect of this invention is based on the fourth aspect thereof, and provides a system wherein the CPU in the terminal executes the second program.

A sixth aspect of this invention is based on the fourth aspect thereof; and provides a system wherein the selecting means in the server comprises means for finding one from among the software translators which corresponds to the CPU type represented by the information contained in the translator request signal; means for using the found software translator as the selected software translator; means for, in cases where the finding means fails to find one, finding one from among the software translator which is compatible with a software translator exclusively for the CPU type represented by the information contained in the translator request signal, and means for using the found compatible software translator as the selected software translator.

The present invention will be described further below with reference to exemplary embodiments and the accompanying drawings, in which:
Fig. 1 is a block diagram of a server-terminal system according to a first embodiment of this invention.
Fig. 2 is a diagram of a server in Fig. 1.
Fig. 3 is a flowchart of an application-program getting routine executed by a computer in a terminal in Fig. 1.
Fig. 4 is a flowchart of an application-program transmitting routine executed by a computer in the server in Fig. 1.
Fig. 5 is a diagram of the contents of a table provided in a memory within a server according to a second embodiment of this invention.

### First Embodiment

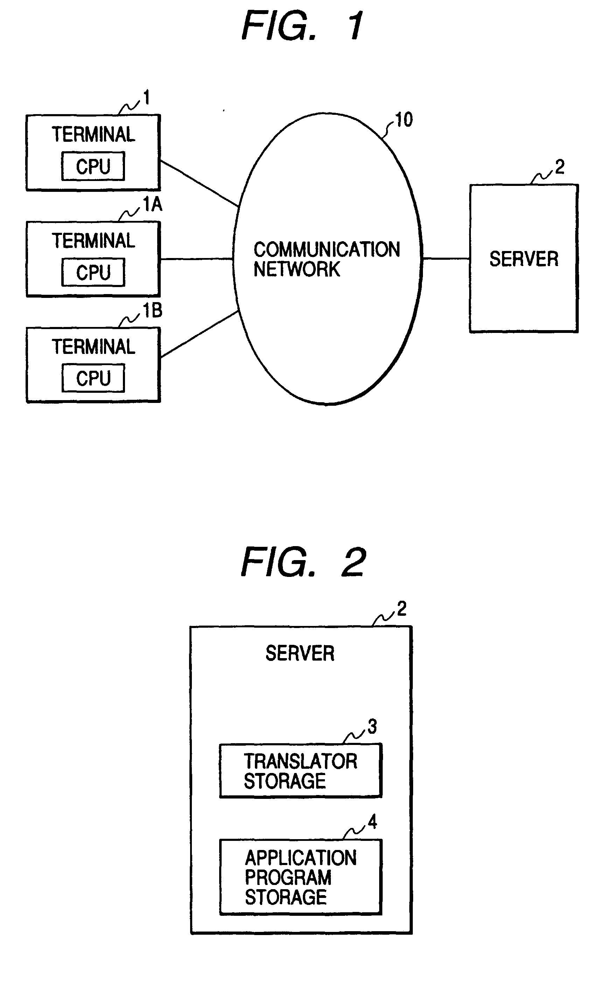

Fig. 1 shows a system according to a first embodiment of this invention. The system in Fig. 1 includes computer-based terminals 1, 1A, and 1B, and a computer-based server 2. The terminals 1, 1A, and 1B are connected to the server 2 via a communication network 10.

The terminals 1, 1A, and 1B include computers, respectively. The computers in the terminals 1, 1A, and 1B have CPU's of different types, similar types, or equal types. The terminals 1, 1A, and 1B are basically similar to each other. Only the terminal 1 will be explained in detail.

The terminal 1 includes a communication control section connected to the communication network 10. Also, the server 2 includes a communication control section connected to the communication network 10. The terminal 1 and the server 2 can communicate with each other via the terminal communication control section, the communication network 10, and the server communication control section.

As shown in Fig. 2, the server 2 includes a storage unit 3 loaded with software translators for converting an intermediate code into different real CPU codes (different native codes for CPU's of various types) respectively. The intermediate code is independent of CPU types. The intermediate code is a processor code designed for a virtual CPU. Basically, the software translators correspond to CPU's of different types respectively. One software translator may be assigned to CPU's of plural types which only slightly differ from each other. The storage unit 3 includes, for example, a hard disc device.

The server 2 includes a storage unit 4 loaded with application programs expressed in the intermediate code. The storage unit 4 includes, for example, a hard disc device.

As previously mentioned, the terminal 1 has a computer containing a CPU. Routines executed by the computer in the terminal 1 include an application-program getting routine.

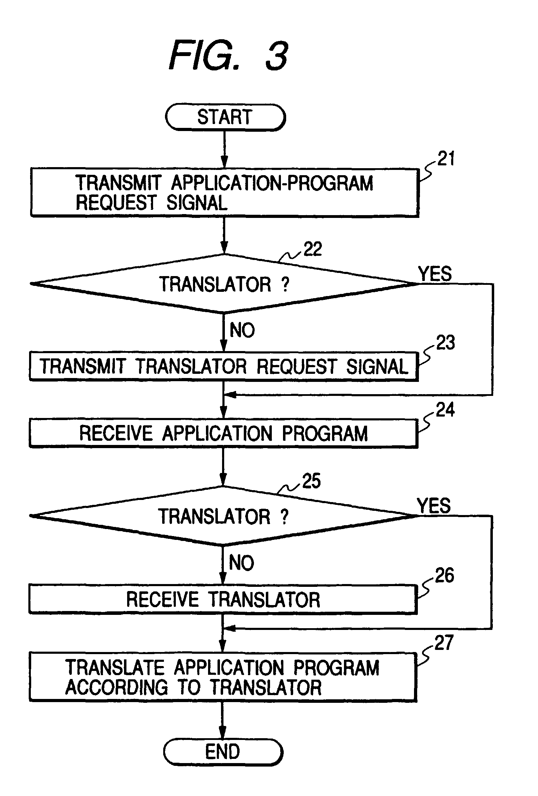

Fig. 3 is a flowchart of the application-program getting routine which is started by a request for a desired application program. As shown in Fig. 3, a first step 21 of the application-program getting routine transmits a signal of a request for the desired application program to the server 2. The application-program request signal contains ID (identification) information of the desired application program.

A step 22 following the step 21 decides whether or not a desired software translator for converting the intermediate code into a native code used by the CPU in the terminal 1 is stored in a memory within the terminal 1. When it is decided that the desired software translator is not stored in the memory, the routine advances from the step 22 to a step 23. When it is decided that the desired software translator is stored in the memory, the routine advances from the step 22 to a step 24.

The step 23 transmits a signal of a request for the desired software translator to the server 2. The translator request signal contains information of the type of the CPU in the terminal 1. Specifically, the translator request signal contains CPU-ID information having an information piece representing the ID number of the CPU in the terminal 1 which can be used as the ID number of the desired software translator. After the step 23, the routine advances to the step 24.

The step 24 waits for a desired application program coming from the server 2. The desired application program is expressed in the intermediate code. The step 24 receives the intermediate-code application program from the server 2.

A step 25 following the step 24 decides whether or not the desired software translator is stored in the memory within the terminal 1. When it is decided that the desired software translator is not stored in the memory, the routine advances from the step 25 to a step 26. When it is decided that the desired software translator is stored in the memory, the routine advances from the step 25 to a step 27.

The step 26 waits for a desired software translator coming from the server 2. Then, the step 26 receives the desired software translator from the server 2. After the step 26, the routine advances to the step 27.

The step 27 uses the desired software translator, and thereby translates the received intermediate-code application program into an application program expressed in the native code (the real CPU code) used by the CPU in the terminal 1. After the step 27, the routine ends.

During a later stage, the native-code application program is executed by the CPU in the terminal 1.

As previously mentioned, the server 2 has a computer. Routines executed by the computer in the server 2 include an application-program transmitting routine.

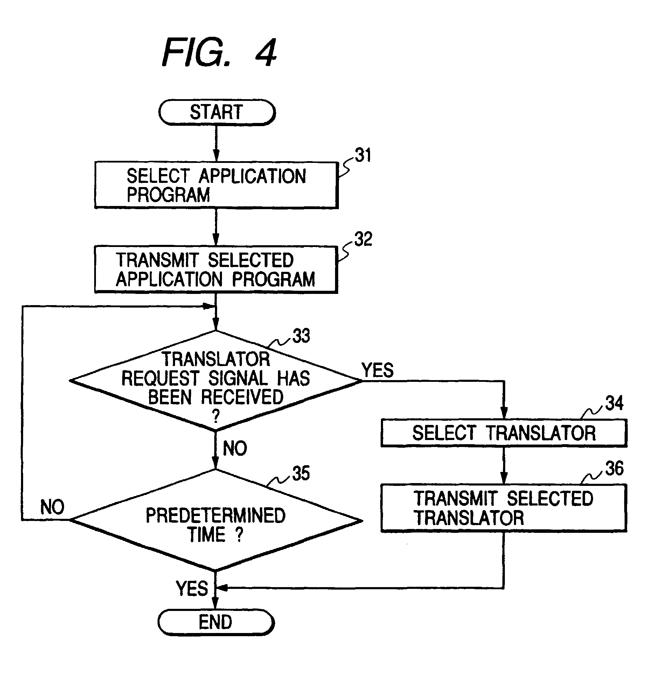

Fig. 4 is a flowchart of the application-program transmitting routine which is started by an application-program request signal coming from a terminal (the terminal 1). With reference to Fig. 4, a first step 31 of the application-program transmitting routine accesses the storage unit 4, and selects one from among the application programs in response to application-program ID information contained in the application-program request signal. The selected application program corresponds to the application-program ID information contained in the application-program request signal.

A step 32 following the step 31 transmits the selected application program to the terminal 1. After the step 32, the routine advances to a step 33.

The step 33 decides whether or not a translator request signal has been received from the terminal 1. In the case where the step 33 decides that a translator request signal has been received, the routine advances from the step 33 to a step 34. Otherwise, the routine advances from the step 33 to a step 35.

The step 35 decides whether or not a predetermined time has elapsed since the moment of the first execution of the step 35. In the case where the step 35 decides that the predetermined time elapsed, the routine ends. Otherwise, the routine returns from the step 35 to the step 33.

The step 34 accesses the storage unit 3, and selects one from among the software translators in response to a software-translator ID number (or a CPU ID number) represented by the translator request signal. The selected software translator corresponds to the software-translator ID number (or the CPU ID number) represented by the translator request signal. The selected software translator may be one compatible with a software translator corresponding to the software-translator ID number (or the CPU ID number) represented by the translator request signal.

A step 36 following the step 34 transmits the selected software translator to the terminal 1. After the step 36, the routine ends.

It is unnecessary for a memory within the terminal 1 to continuously store a software translator. Therefore, the memory within the terminal 1 can be efficiently used.

### Second Embodiment

A second embodiment of this invention is similar to the first embodiment thereof except for design changes mentioned hereinafter. In the second embodiment of this invention, CPU-ID information pieces are assigned to real CPU codes and types of CPU's, respectively.

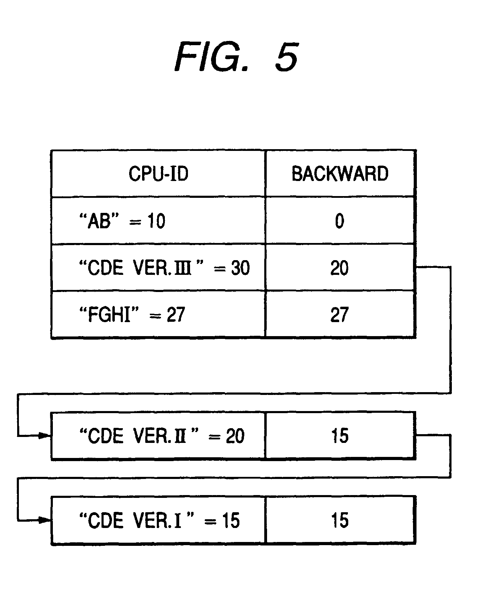

In the second embodiment of this invention, a server 2 (see Figs. 1 and 2) includes a memory loaded with a table indicating a relation between CPU-ID information pieces and software translators. Fig. 5 shows an example of the contents of the table.

According to the table in Fig. 5, there are pairs each having a CPU-ID information piece and a backward entry information piece. A CPU-ID information piece of "10" is assigned to an "AB" processor ("AB" is a CPU name). A CPU-ID information piece of "30" is assigned to a "CDE ver. III" processor (a "CDE ver. III" CPU). A CPU-ID information piece of "27" is assigned to an "FGHI" processor (an "FGHI" CPU). A CPU-ID information piece of "20" is assigned to a "CDE ver. II" processor (a "CDE ver. II" CPU). A CPU-ID information piece of "15" is assigned to a "CDE ver. I" processor (a "CDE ver. I" CPU).

In a pair, a backward entry information piece being equal in state to a CPU-ID information piece indicates that a software translator exclusively for a CPU corresponding to the CPU-ID information piece is present in a storage unit 3 (see Fig. 2). In a pair, a non-"0" backward entry information piece being different in state from a CPU-ID information piece indicates that a software translator exclusively for a CPU corresponding to the CPU-ID information piece is absent from the storage unit 3 but a compatible software translator adaptable to the CPU may be present In the storage unit 3. In a pair, a backward entry information piece of "0" indicates that a software translator exclusively for a CPU corresponding to the CPU-ID information piece is absent from the storage unit 3, and that a compatible software translator adaptable to the CPU is also absent from the storage unit 3.

For the "AB" processor corresponding to a CPU-ID information piece of "10", the related backward entry information piece is "0". The "0" backward entry information piece indicates that a software translator exclusively for the "AB" processor is absent from the storage unit 3, and that a compatible software translator is also absent.

For the "CDE ver. III" processor corresponding to a CPU-ID information piece of "30", the related backward entry information piece is "20". The "20" backward entry information piece indicates that a software translator exclusively for the "CDE ver. III" processor is absent from the storage unit 3 but a compatible software translator adaptable to the "CDE ver. III" processor may be present in the storage unit 3. The "20" state of the backward entry information piece advises a search or a check on a pair having a CPU-ID information piece of "20".

For the "CDE ver. II" processor corresponding to a CPU-ID information piece of "20", the related backward entry information piece is "15". The "15" backward entry information piece indicates that a software translator exclusively for the "CDE ver. II" processor is absent from the storage unit 3 but a compatible software translator adaptable to the "CDE ver. II" processor may be present in the storage unit 3. The "15" state of the backward entry information piece advises a search or a check on a pair having a CPU-ID information piece of "15".

For the "CDE ver. I" processor corresponding to a CPU-ID information piece of "15", the related backward entry information piece is "15". The "15" backward entry information piece indicates that a software translator exclusively for the "CDE ver. I" processor is present in the storage unit 3.

For the "FGHI" processor corresponding to a CPU-ID information piece of "27", the related backward entry information piece is "27". The "27" backward entry information piece indicates that a software translator exclusively for the "FGHI" processor is present in the storage unit 3.

In the case where CPU-ID information contained in a received translator request signal corresponds to the "CDE ver. III" processor, that is, in the case where the CPU-ID information within the received translator request signal is "30", the server 2 (see Figs. 1 and 2) operates as follows. The server 2 refers to the previously-indicated table in response to the CPU-ID information within the received translator request signal. The server 2 checks a pair in the table which has a CPU-ID information piece of "30". The server 2 detects the sate of a backward entry information piece in the pair. Since the detected state of the backward entry information piece is "20" (see Fig. 5), the server 2 checks a pair in the table which has a CPU-ID information piece of "20". The server 2 detects the sate of a backward entry information piece in the pair. Since the detected state of the backward entry information piece is "15" (see Fig. 5), the server 2 checks a pair in the table which has a CPU-ID information piece of "15". The server 2 detects the sate of a backward entry information piece in the pair. Since the detected state of the backward entry information piece is "15" (see Fig. 5), the server 2 recognizes that a software translator exclusively for the CPU (the "CDE ver. I" processor) corresponding to a CPU-ID information piece of "15" is present in the storage unit 3. The server 2 reads, from the storage unit 3, the software translator exclusively for the CPU (the "CDE ver. I" processor) corresponding to a CPU-ID information piece of "15". The server 2 uses the read software translator as a compatible software translator adaptable to the CPU (the "CDE ver. III" processor) corresponding to a CPU-ID information piece of "30". The server 2 transmits the read software translator to a related terminal.

### Third Embodiment

A third embodiment of this invention is a modification of the first embodiment or the second embodiment thereof. In the third embodiment of this invention, a server uses a communication satellite to repetitively transmit signals of various application programs at a fixed period. A terminal receives the signals and recovers the application programs. The terminal is provided with a device for selecting desired one from among the application programs. The terminal downloads the selected application program into an internal memory. In addition, the server uses the communication satellite to repetitively transmit signals of various software translators at a fixed period. The terminal receives the signals and recovers the software translators. The terminal is provided with a device for selecting desired one from among the software translators. The terminal downloads the selected software translator into an internal memory.

## Claims

1. A method of executing a program, comprising the steps of:
transmitting a first program from a server to a terminal including a CPU, the first program being expressed in an intermediate code independent of CPU types;
transmitting a software translator from the server to the terminal;
in the terminal, translating the first program into a second program according to the software translator, the second program being expressed in a code used by the CPU; and
executing the second program by the CPU in the terminal.

2. A system comprising:
a server;
a terminal including a CPU;
means for transmitting a first program from the server to the terminal, the first program being expressed in an intermediate code independent of CPU types;
means for transmitting a software translator from the server to the terminal; and
means provided in the terminal for translating the first program into a second program according to the software translator, the second program being expressed in a code used by the CPU.

3. A system as recited in claim 2, wherein the CPU in the terminal executes the second program.

4. A system comprising:
a server storing a first program expressed In an intermediate code independent of CPU types, and storing software translators for different CPU types respectively;
a terminal including a CPU;
means for transmitting the first program from the server to the terminal;
means for transmitting a translator request signal from the terminal to the server, the translator request signal containing information of a type of the CPU in the terminal;
means provided in the server for selecting one from among the software translators in accordance with the CPU type information contained in the translator request signal;
means for transmitting the selected software translator from the server to the terminal in response to the translator request signal; and
means provided in the terminal for translating the first program into a second program according to the software translator, the second program being expressed in a code used by the CPU in the terminal.

5. A system as recited in claim 4, wherein the CPU in the terminal executes the second program.

6. A system as recited in claim 4, wherein the selecting means in the server comprises:
means for finding one from among the software translators which corresponds to the CPU type represented by the information contained in the translator request signal;
means for using the found software translator as the selected software translator;
means for, in cases where the finding means fails to find one, finding one from among the software translator which is compatible with a software translator exclusively for the CPU type represented by the information contained in the translator request signal, and
means for using the found compatible software translator as the selected software translator.
